# EUROPÄISCHE PATENTSCHRIFT

(11) **EP 1 516 163 B1**
(45) Veröffentlichungstag und Bekanntmachung des Hinweises auf die Patenterteilung: **05.12.2018**
(21) Anmeldenummer: 03760640.7
(22) Anmeldetag: 18.06.2003
(51) Int. Cl.: G01F 11/02, F04B 49/08, F04B 11/00, F04B 13/00, G01F 13/00, G05D 7/06

(54) **VOLUMENSTROMDOSIEREINRICHTUNG**
DEVICE FOR METERING A VOLUME FLOW
DISPOSITIF DE DOSAGE DE DEBIT VOLUMETRIQUE

(30) Priorität: 24.06.2002 DE 10228025
(43) Veröffentlichungstag der Anmeldung: 23.03.2005
(73) Patentinhaber: Ehrler, Alois Anton, 74673 Mulfingen-Zaisenhausen (DE)
(72) Erfinder: Ehrler, Alois Anton, 74673 Mulfingen-Zaisenhausen (DE)
(74) Vertreter: Rüger Abel
(86) Internationale Anmeldenummer: PCT/EP2003/006419
(87) Internationale Veröffentlichungsnummer: WO 2004/001347

(56) Entgegenhaltungen:
- EP-A- 0 370 487
- EP-A- 0 471 930
- US-A- 3 440 967
- US-A- 5 106 268

## Beschreibung

Das Durchlassverhalten von Düsen, insbesondere von Düsen, die mit kompressiblen Fluiden betrieben werden, lässt sich nicht exakt berechnen. Es ist notwendig, die Düsen nachträglich zu vermessen, um die Durchflussrate abhängig vom Druck zu ermitteln. Die Kennlinienbestimmung soll mit hoher Genauigkeit erfolgen.

Dabei ist es einfach, den Druck mit hoher Genauigkeit messen, während der Volumenstrom des Fluids nur schwer erfassbar ist.

Es ist bekannt zur Kennlinienaufnahme Fluidquellen zu verwenden, bei denen über Laminarflowelemente ein aus einer kritisch betriebenen Düse kommender Fluidstrom der zu prüfenden Düse zugeführt wird. Diese Messanordnung ist verhältnismäßig genau, eignet sich aber nicht als Messnormal zum kalibrieren.

Aus der EP 0 471 930 A1 ist eine mehrzylindrige Kolbenpumpe bekannt, die mit Sensoren zur Erfassung verschiedener Pumpenparameter eingerichtet ist. Insbesondere die Kompressibilität und z.B. die adiabatische Erwärmung sollen erfasst und die Pumpe z.B. hinsichtlich ihrer Drehzahl angepasst werden.

Ausgehend hiervon ist es Aufgabe der Erfindung, eine Volumenstromdosiereinrichtung zu schaffen, mit der es möglich ist, einen sehr genauen Fluidmengenstrom bei bekanntem Druck zu erzeugen.

Diese Aufgabe wird erfindungsgemäß durch die Volumenstromdosiereinrichtung mit den Merkmalen des Anspruchs 1 gelöst.

Bei der neuen Einrichtung sind zwei strömungsmäßig miteinander gekoppelte Verdrängereinrichtungen vorgesehen, die gegenläufig betrieben werden. Die eine Verdrängereinrichtung nimmt über eine Speiseleitung zugeführtes Fluid auf, während die andere Verdrängereinrichtung Fluid an die zu prüfende Düse abgibt. Wenn die Geschwindigkeit, mit der die Verdrängerkolben bewegt werden, so eingeregelt wird, dass zwischen den beiden Verdrängereinrichtungen kein Fluidaustausch stattfindet, entspricht der dem Prüfling zugeführte Fluidmengenstrom der Volumenänderung der Verdrängereinrichtung, die mit dem Prüfling gekuppelt ist.

Die Bewegung des Verdrängerkolbens lässt sich sehr genau einstellen, womit nicht nur der Druck exakt vorgegeben werden kann, sondern auch der Fluidmengenstrom.

Die erste und die zweite Verdrängereinrichtung weist einen Zylinder auf und ein Verdrängerkolben führt von einer Stirnseite des Zylinders abgedichtet in den Zylinder, derart, dass das freie Volumen des Zylinders veränderlich ist.

Die Anordnung wird sehr einfach, wenn jede Verdrängereinrichtung aus einem Zylinder besteht, in den von einem Ende her ein Verdrängerkolben hineinführt. Der Durchmesser des Verdrängerkolbens ist kleiner, als die lichte Weite der Zylinderkammer, damit nicht durch unerwünschte Strömungen innerhalb der Zylinderkammer Druckunterschiede in der Zylinderkammer auftreten, die zu einer Verfälschung führen.

Jede der beiden Zylinderkammern ist mit zwei Leitungen versehen, von denen die eine zur Verbindung mit der anderen Zylinderkammer dient. Gegebenfalls ist es zweckmäßig, wenn die Leitungen an unterschiedlichen Enden der Zylinderkammer in diese einmünden.

Um den Fluidaustausch zwischen den Verdrängereinrichtungen zu messen, können Druckmesseinrichtungen oder beliebige Arten von qualitativ arbeitenden Strömungssensoren verwendet werden. Bei Verwendung einer Druckmesseinrichtung wird dafür gesorgt, dass der Druck in der Verbindungsleitung exakt genauso groß ist, wie der Druck in der speisenden Leitung. Dadurch ist sichergestellt, dass die mit dem Verbraucher oder Prüfling verbundene Verdrängereinrichtung weder zusätzliches Fluid aufnimmt, noch Fluid rückwärts auf die Speiseeinrichtung abgibt.

Anstelle der Druckmesseinrichtung kann auch ein Strömungssensor z.B eine Flowmesseinrichtung verwendet werden, was den Vorteil hat, dass keine Druckdifferenzen gemessen werden müssen.

Zum Antrieb der beiden Verdrängereinrichtungen können Motoren verwendet werden, die eine exakt vorgebbare Drehzahl oder Antriebsgeschwindigkeit liefern. Besonders geeignet sind hierzu Schrittmotoren oder Synchronmotoren.

Die Dichtungen, mit denen die Verdrängerkolben oder ihre Antriebsstangen abgedichtet werden, sollen möglichst wenig Reibungskraft entwickeln. Demzufolge ist ihre Dichtwirkung begrenzt. Die Anordnung kann ohne weitere Maßnahme vorteilhafterweise nur bei niedrigen Drücken von wenigen bar eingesetzt werden. Wenn die Anordnung bei hohen Drücken verwendet werden soll, wird die Volumenstromdosiereinrichtung ingesamt in einem abgedichteten Gehäuse untergebracht, wobei das Innere des Gehäuses auf einen Druck gebracht wird, der im Wesentlichen dem Prüfdruck entspricht, mit dem der Prüfling betrieben werden soll. Auf diese Weise kann die Druckdifferenz an der Dichtung wieder klein gehalten werden, womit schwache Dichtungen Verwendung finden können, die wenig Reibkraft entwickeln.

Im übrigen sind Weiterbildungen der Erfindung Gegenstand von Unteransprüchen. Dabei sollen auch solche Merkmalskombinationen als beansprucht angesehen werden auf die kein ausdrückliches Ausführungsbeispiel gerichtet ist.

In der Zeichnung sind Ausführungsbeispiele des Gegenstandes der Erfindung dargestellt. Es zeigen:
- Fig. 1: die erfindungsgemäße Volumenstromdosiereinrichtung in einer schematischen Prinzipdarstellung für niedrige Drücke und
- Fig. 2: die erfindungsgemäße Volumenstromdosiereinrichtung für hohe Drücke ebenfalls in einer Prinzipdarstellung.

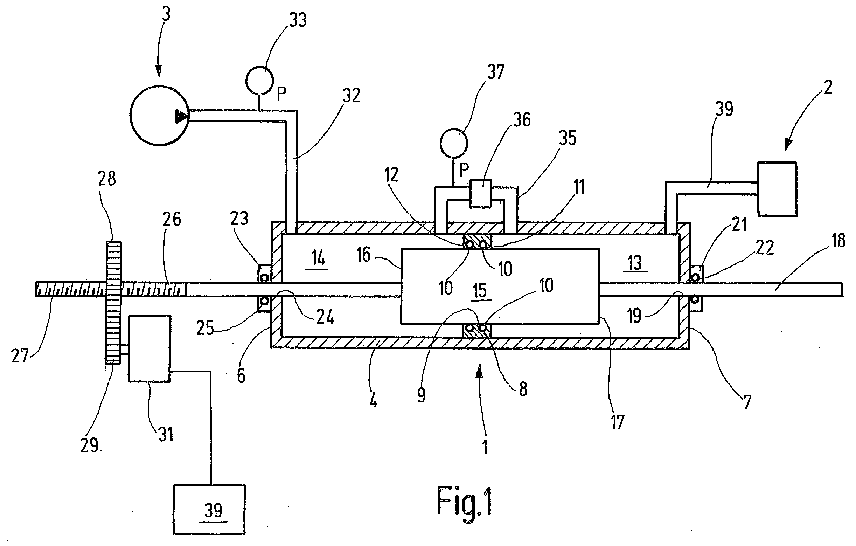

Figur 1 zeigt in einer stark schematisierten Darstellung eine Volumenstromdosiereinrichtung 1, die dazu dient, einen genau dosierten Volumenstrom einem Prüfling 2 beispielsweise einer Düse zuzuführen. Der Volumenstrom wird von einer Fluidquelle 3 beispielsweise einer Pumpe bereitgestellt. Bei dem Fluid handelt es sich um ein kompressibles Fluid wie Luft oder ein anderes Gas.

Zu der Dosiereinrichtung 1 gehört ein zylindrisches Gehäuse 4, das an beiden Stirnenden durch Stirnwände 6 und 7 verschlossen ist. Etwa in der Mitte zwischen den beiden Stirnwänden 6 und 7 befindet sich ein Ringbund 8 mit einer Bohrung 9, deren Durchmesser kleiner ist, als der Innendurchmesser des zylindrischen Gehäuses 4. Die Bohrung 9 enthält zwei Dichtungsringe 10. Der Ringbund 8 wird von zwei ringförmigen Stirnflächen 11 und 12 begrenzt.

Die Stirnfläche 11 hat von der Innenseite der Stirnwand 7 denselben Abstand wie die Stirnfläche 12 von der Innenseite der Stirnwand 6. Hierdurch entstehen zwei identische Zylinderkammern 13 und 14, die durch den Ringbund 8 voneinander getrennt sind. Der Ringbund 8, bzw dessen Stirnflächen sind die anderen Stirnenden der beiden Zylinderkammern 13, 14.

Durch die Bohrung 9 des Ringbunds 8 führt verschieblich ein zylindrischer Kolben 15, der sich gedanklich in zwei miteinander verbundene Verdrängerkolben aufteilen lässt. Der eine bewegt sich in der Zylinderkammer 14, während der andere in der Kammer 13 wirksam ist. Die Länge des Kolben 15 ist derart bemessen, dass sie dem Abstand der Stirnfläche 12 von der Innenseite der Stirnwand 7 entspricht. Auf diese Weise wird erreicht, dass eine Stirnfläche 16 des Kolbens 15 mit der Stirnfläche 12 bündig ist, wenn die Stirnfläche 17 an der Stirnwand 7 anstößt, bzw. umgekehrt die Stirnfläche 17 mit der Stirnfläche 11 bündig ist, wenn die Stirnfläche 17 an der Innenseite der Stirnwand 6 anstößt.

Von der Stirnwand 17 geht eine Kolbenstange 18 aus, die durch eine Bohrung 19 in der Stirnwand 7 nach außen führt.

Zum Abdichten der Kolbenstange 18 sitzt auf der Stirnwand 7 ein rohrförmiger Ansatz 18, in dem eine Dichtung 22 in einer entsprechenden Aufnahmenut liegt. Mit Hilfe der Dichtung 22 ist die Kolbenstange 18 abgedichtet.

Eine ähnliche Anordnung findet sich bei der Stirnwand 6. Auch diese ist mit einem rohrförmigen Ansatz 23, einer durchgehenden Bohrung 24 sowie einer Dichtung 25 versehen. Durch die Bohrung 24 und die Dichtung 25 verläuft eine weitere Kolbenstange 26. Der Durchmesser der Kolbenstange 26 ist mit dem Durchmesser der Kolbenstange 18 identisch. Beide Kolbenstangen 18 und 26 sind koaxial und koaxial zu den beiden Zylinderkammern 13 und 14 sowie der Bohrung 9. Auf diese Weise werden für beide Zylinderkammern 13 und 14 möglichst symmetrische Verhältnisse erzielt.

An ihrem freien Ende geht die Kolbestange 26 in eine Gewindespindel 27 über, auf der ein Stirnzahnrad 28 aufgeschraubt ist. Das Stirnzahnrad 28 ist durch geeignete Mittel, die in der Figur nicht dargestellt sind, in axialer Richtung gesichert. Mit dem Zahnrad 28 kämmt ein Ritzel 29, das über einen Motor 31 wahlweise in Umdrehungen zu versetzen ist. Der Motor 31 bildet zusammen mit den beiden Zahnrädern 29, 28 und der Gewindespindel 27 einen Schraubtrieb, durch den die Kolbenstange 26 und der damit gekoppelte Kolben 15 linear hin- und herbewegbar ist.

In unmittelbarer Nähe der Stirnwand 6 mündet in die Zylinderkammer 14 eine Leitung 32, die die Zylinderkammer 14 mit der Druckseite der Pumpe 3 verbindet. Gegebenenfalls kann die Leitung 32 mit einer Druckmesseinrichtung 33 versehen sein.

In der ähnlichen Weise wie die Pumpe an die Zylinderkammer 14 angeschlossen ist, ist der Prüfling 2 mit der Zylinderkammer 13 verbunden. Hierzu ist eine Leitung 34 vorgesehen, die in unmittelbarer Nähe neben der Innenseite der Stirnwand 7 mündet.

Neben den beiden Stirnseiten 11 und 12 des Ringbunds 8 mündet eine Verbindungsleitung 35, die einen Strömungssensor 36 enthält. Zusätzlich zu dem Strömungssensor 36 oder anstelle von diesem kann ein Druckmessfühler 37 den Druck in der Verbindungsleitung 35 messen.

Der Motor 31 ist ein in der Drehzahl regelbarer Motor beispielsweise ein Schrittmotor oder ein Synchronmotor, der seine Versorgungsspannung aus einer zentralen Steuerung 39 erhält. An die Steuerung 39 ist über eine nicht weiter gezeigte elektrische Leitung auch der Strömungssensor 36 angeschlossen.

Die Wirkungsweise der gezeigten Anordnung ist wie folgt:
Zu Beginn der Messung wird durch Ingangsetzen des Motors 31 der Verdrängerkolben 15 in die linke Endlage gebracht. In dieser Lage ist das freie Volumen der Zylinderkammer 14 minimal, während die Kammer 13 ihr maximales freies Volumen aufweist. Es wird nunmehr mit Hilfe der Pumpe 3 unter Beobachtung des Drucksensors 33 der Volumenstrom auf einen gewünschten Druck gebracht.

Das Fluid mit dem der Prüfling 2 zu vermessen ist, strömt von der Pumpe 3 durch die Leitung 32 in den Ringspalt zwischen der Außenwand der Zylinderkammer 13 und dem Kolben 14 zu der Verbindungsleitung 35. Die Verbindungsleitung 35 mündet in unmittelbarer Nähe neben der Stirnwand 12. Von hier aus strömt das Fluid in die Zylinderkammer 13 und zwar unmittelbar neben der Stirnwand 11. Das Fluid strömt durch die Zylinderkammer 13 und über die Leitung 34 zu dem Prüfling 2.

In dieser Betriebsstellung ist der Druck bekannt, mit dem der Prüfling 2 beaufschlagt wird. Die Volumenrate ist noch unbekannt. Nachdem sich der Gleichgewichtszustand eingestellt hat und sämtliche Teile auf der Temperatur des Fluids sind, setzt die zentrale Steuerung 39 den Antriebsmotor 31 in Gang.

Sobald der Kolben 15 beginnt, sich bezogen auf Figur 1 von links nach rechts zu bewegen, nimmt die Zylinderkammer 14 zusätzliche Fluid aus der Quelle 3 auf, während aus der Zylinderkammer 13 zusätzlich das dort enthaltene Fluid über den Prüfling 2 abströmt. Bei einer bestimmten Bewegungsgeschwindigkeit des Kolbens 15 wird die Schluckrate, die an der Zylinderkammer 14 zu beobachten ist, gleich derjenigen Rate sein, mit der Zylinderkammer 13 Fluid zu dem Prüfling 2 pumpt. Wenn dieser Zustand erreicht ist, wird durch die Verbindungsleitung 35 keine Ausgleichsströmung mehr stattfinden, d.h. der Strömungssensor 36 wird keine Strömung mehr durch die Leitung 35 messen. Die Steuerung 39 erfasst den Zustand und hält für den weiteren Betrieb die hierfür erforderliche Drehzahl des Motors 31 konstant.

Ab diesem Zeitpunkt ist bekannt, welcher Volumenstrom dem Prüfling zugeführt wird. Der Volumenstrom, der dem Prüfling 2 zugführt wird, berechnet sich aus der Geschwindigkeit, mit der der Kolben 15 bewegt wird und der Querschnittsfläche des Kolbens 15.

Der Druck ist ebenfalls bekannt, denn es ist derselbe Druck, auf den zuvor die Anordnung bei noch stehendem Motor 31 eingeregelt wurde.

Somit kann mit Hilfe der Dosiereinrichtung 1 dem Prüfling 2 ein bekannter Fluidmengenstrom bei einem bekannten Druck zugeführt werden.

Die Dosierung endet, sobald der Kolben 15 mit seiner Stirnseite 17 an der Stirnwand 7 angekommen ist.

Die Kolbenstange 18 dient dazu, das Volumen der Kolbenstange 26 zu kompensieren. Andernfalls würde unsymmetrische Verhältnisse vorliegen, die die Messung verfälschen. Durch die Verwendung von zwei Kolbenstangen 18 und 26 ist das Schluckvolumen in der Zylinderkammer 14 exakt gleich dem Pumpvolumen der Zylinderkammer 13, wenn der Kolben 15 verschoben wird.

Aus der obigen Erläuterung ergibt sich, dass die Zylinderkammer 14 mit dem Kolben 15 als im Schluckbetrieb arbeitende Verdrängereinrichtung arbeitet, während die Zylinderkammer 13 ebenfalls mit dem betreffenden Abschnitt des Kolbens 15 als im Pumpbetrieb arbeitende Verdrängereinrichtung wirkt. Es ist somit zwei Verdrängereinrichtungen mechanisch miteinander gekuppelt. Sie werden synchron angetrieben. Die gezeigte Ausführungsform hat den Vorteil sehr kompakt zu sein und mechanisch einfach. Eine räumliche Trennung der beiden Zylinderkammern 13 und 15 und die Verwendung von zwei miteinander nicht einstückigen Verdrängerkolben wäre ebenfalls denkbar.

Die Bewegung des Kolbens 15 soll möglichst gleichförmig sein. Jegliche Ungleichförmigkeiten würden sich in Schwankungen des Luftmengenstroms bemerkbar machen. Aus diesem Grunde sind die Dichtungen 22, 24 sowie die Dichtungen 10 in der Bohrung 9 Dichtungen, die eine möglichst geringe radiale Vorspannung erbringen. Sie reichen gerade eben aus, damit bei dem gewünschten Prüfdruck gegenüber der Atmosphäre keine Undichtigkeiten auftreten. Solange der Prüfdruck geringfügig über dem Atmosphärendruck liegt, braucht keine exakte Abdichtng erfolgen. Es genügt, wenn im Bereich der Dichtungen 10, 22 und 25 ein hinreichend großer Strömungswiderstand auftritt, der groß genug ist, dass die hierüber abströmende Fluidmenge das Messziel nicht beeinträchtigt.

Anstelle der Verwendung des Strömungssensors 36 als Sensor, um zu erfassen, ob durch die Leitung 35 eine Ausgleichsströmung erfolgt, kann auch ein Drucksensor 37 in Verbindung mit einem Stromventil verwendet werden. Das Bauteil 36 soll in diesem Fall ein verstellbares Drosselventil bedeuten. Der mit dem Drucksensor 37 erfasste Druck wird durch die Steuereinrichtung 39 mit dem Druck verglichen, den der Sensor 33 meldet. Wenn beide Drücke gleich sind, strömt durch die Verbindungsleitung 35 ebenfalls kein Fluid. Vom Gesichtspunkt der Empfindlichkeit ist hingegen ein Strömungssensor 36 vorzuziehen. Als Strömungssensor kann jede beliebige Art von Strömungssensor verwendet werden, mit dem es möglich ist, auch geringfügige Fluidströmungen durch die Leitung 35 zu erfassen.

Eine Erfassung der Strömungsrichtung ist hingegen nicht notwendig, wenn die Drehzahl des Motors 31 von Null an gesteigert wird. Sobald das Strömungsminimum in der Verbindungsleitung 35 erreicht wird, genügt es die Drehzahl konstant zu halten. Eine Strömung in umgekehrter Richtung wird nicht auftreten, es sei denn der Motor 31 wird versehentlich mit zu hoher Drehzahl betrieben, so dass ein Rückdrücken durch die Leitung 35 erfolgt.

Desweiteren ist es möglich in der Verbindungsleitung 35 ein Absperrventil 35 vorzusehen. Das Absperrventil kann geschlossen werden, sobald der oben erwähnte Gleichgewichtszustand erreicht ist, weil dann ohnehin durch die Leitung 35 kein Gas mehr strömt. Die Verbindung des Absperrventils, das in Figur 1 nicht gezeigt ist, ermöglich eine sehr konstante Messung, die von zufälligen Druckschwankungen der Pumpe 3 unabhängig macht.

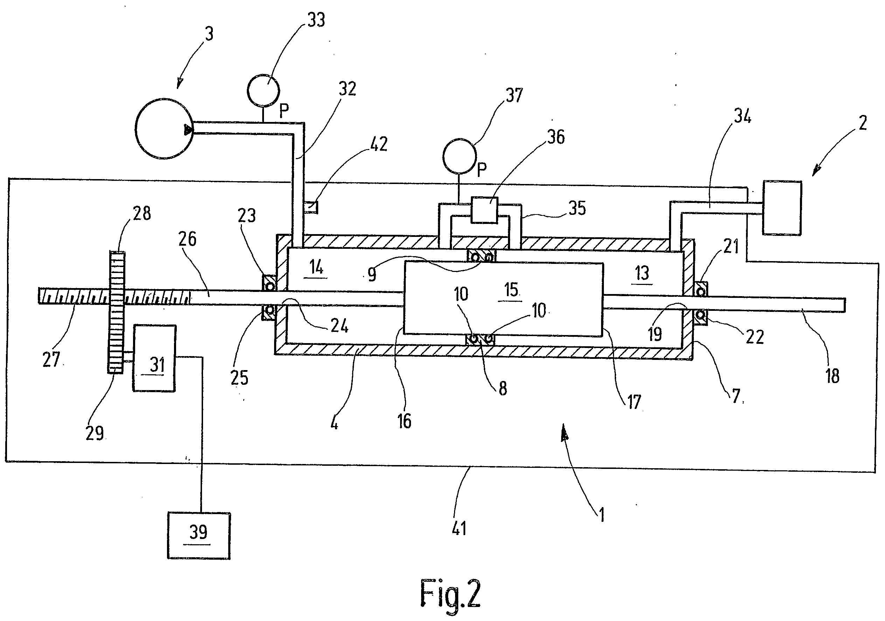

Wenn die Anordnung nach Figur 1 mit schwach wirkenden Dichtungen bei höheren Drücken eingesetzt werden soll, bei denen durch die Dichtungen größere Fluidverluste auftreten würden, eignet sich die Anordnung nach Figur 2. Diese Anordnung unterscheidet sich von der Vorerwähnten durch die Verwendung eines zusätzlichen abgedichteten Gehäuses 41, in dem das Zylindergehäuse 4 einschließlich dem Antriebsmotor 31 und dem Getriebe aus den Zahnrädern 28 und 29 untergebracht ist. Aus dem Gehäuse führen lediglich die Leitungen 32 und 39 hinaus, sowie die elektrischen Verbindungsleitungen zu dem Motor 31 zu dem Strömungssensor 36 und zu dem Drucksensor 37, falls dieser vorhanden ist. Außerdem erhält die Leitung 32 innerhalb des Gehäuses 41 einen Auslass 42, über den Fluid, das über Leitungen 32 zugeführt wird, in das Innere des Gehäuses 41 eingespeist wird.

Hierdurch wird erreicht, dass im Gleichgewichtszustand beim Messen, bei dem in den Kammern 13 und 14 derselbe Druck herrscht, dieser Druck auch im Außenraum der Dosiereinrichtung 1 vorhanden ist, so dass Leckagen an den Dichtungen 22 und 25 nicht mehr auftreten können.

Im übrigen ist die Wirkungsweise dieselbe wie zuvor erwähnt.

Ein weiterer Vorteil der erfindungsgemäßen Einrichtung besteht darin, dass sie beliebig temperierbar ist. Sie eignet sich somit für beliebige Drücke und beliebige Temperaturen.

Durch Vergrößerung des Hubs des Kolbens 15 können auch größere Volumina mit bekanntem Volumenmengenstrom für den Prüfling 2 produziert werden.

Wichtig ist lediglich, dass bei der gezeigten Art de Anschlüsse der Leitungen 32, 34, 36 innerhalb der beiden Zylinderkammern 13 und 14 keine Spalte mit dem Kolben 15 auftreten, die als Drosseln wirken. Deswegen muss der Kolben 15 in den beiden Zylinderkammern 13 und 15 einen erheblichen Ringspalt freilassen, insbesondere wenn mittels Durchströmung die Einrichtung temperiert wird. Andernfalls würden zu große Druckabfälle auftreten, wenn das Fluid von der Leitung 32 zu der Leitung 34 strömt.

Beide kleinen Volumenströmen sollten hingegen die Toträume so klein wie möglich gehalten werden. Hierzu wird der Durchmesser des Kolben 15 vergrößert und sämtliche Leitungen münden in den Stirnwänden 6 bzw 7.

Außerdem ist es zweckmäßig, wenn das Fluid jede der beiden Zylinderkammern 13 und 14 möglichst über die gesamte Länge durchströmt. Dabei sollte sich die speisende Leitung, die von der Druckquelle 3 kommt, in jenen Bereich einmünden, der über einen möglichst langen Hubweg des Kolbens nicht vom Kolben berührt wird. Sinngemäß das Gleiche gilt für die wegführende Leitung 34 in Relation zu der Zylinderkammer 13. Die beiden Leitungen 32 und 34 sind deswegen auch in unmittelbarer Nähe der Stirnwände 6 und 7 angeordnet. Sie können auch durch diese hindurch in die Zylinderkammern 13, 14 einmünden. Vor diesem Hintergrund wäre es auch zweckmäßig die Verbindungsleitung 35 an entsprechender Stelle einmünden zu lassen. Nachteilig wäre hier allerdings die mangelnde Durchströmung von Todräumen, so dass das temperieren schwierig würde. Ein günstiger Kompromiss wird erhalten, wenn die Verbindungsleitung 35 auf beiden Seiten des Ringbunds 8 in dessen unmittelbarer Nähe einmündet. Zur besseren Temperierung kann anstelle von einer Verbindungsleitung 35 auch eine Gruppe von Verbindungsleitungen verwendet werden. Es genügt dabei die Strömung in einer der Verbindungsleitungen 35 zu messen.

Mit der Kolbenstange 18 kann eine Längenmesseinrichtung gekuppelt sein um die Geschwindigkeit des Kolbens 15 exakt zu messen unabhängig von Steigungsfehlern der Gewindespindel 28.

Eine Dosiereinrichtung zum Erzeugen eines genau dosierten Volumenmengenstroms weist zwei Verdrängereinrichtungen auf, die gegenphasig betrieben werden. Dabei werden die Geschwindigkeiten, mit denen die Volumina der Verdrängereinrichtungen verstellt werden, so einjustiert, dass keine Ausgleichsströmung stattfindet. In diesem Zustand ist der Volumenmengenstrom, der an den Prüfling abgegeben wird gleich dem Volumenstrom, den die andere Verdrängereinrichtung von einer Druckquelle aufnimmt.

## Patentansprüche

1. Volumenstromdosiereinrichtung (1) zum Abgeben eines definierten Mengenstroms eines Fluids, insbesondere eines kompressiblen Fluids, mit einem vorgegeben Druck an einen Verbraucher (2),
mit einer Zuleitung (32) für das Fluid,
mit einer ersten Verdrängereinrichtung (14,15), die an die Zuleitung (32) angeschlossen ist,
mit einer zweiten Verdrängereinrichtung (13,15), die über eine Verbindungsleitung (35) mit der ersten Verdrängereinrichtung (14,15) strömungsmäßig in Verbindung steht,
mit einer Speiseleitung (34), die von der zweiten Verdrängereinrichtung (13,15) zu dem Verbraucher (2) führt,
mit einer Differenzdruckmesseinrichtung (33,37) oder einer Strömungsmesseinrichtung (36) in der Verbindungsleitung (35) zur Messung eines Fluidaustausches zwischen den Verdrängereinrichtungen (13,14,15), und
mit einer Antriebseinrichtung (26,31), die mit den beiden Verdrängereinrichtungen (13,14,15) gekoppelt ist, derart, dass die freien Volumen der beiden Verdrängereinrichtungen (13,14,15) gegensinnig um denselben Betrag verändert werden,
wobei die erste und die zweite Verdrängereinrichtung (13,14,15) einen Zylinder (13,14) aufweist und wobei ein Verdrängerkolben (15) von einer Stirnseite (8) des Zylinders (13,14) abgedichtet in den Zylinder (13,14) führt, derart, dass das freie Volumen des Zylinders (13,14) veränderlich ist,

2. Volumenstromdosiereinrichtung nach Anspruch 1,
**dadurch gekennzeichnet, dass** eine Druckmesseinrichtung (33) in der Zuleitung (32) oder der Speiseleitung (34) zu dem Verbraucher (2) angeordnet ist.

3. Volumenstromdosiereinrichtung nach Anspruch 1,
**dadurch gekennzeichnet, dass** die lichte Weite des Zylinders (13,14) größer ist, als der Durchmesser des Verdrängerkolbens (15).

4. Volumenstromdosiereinrichtung nach Anspruch 1,
**dadurch gekennzeichnet, dass** der Verdrängerkolben (15) über seine gesamte wirksame Länge einen konstanten Querschnitt aufweist.

5. Volumenstromdosiereinrichtung nach Anspruch 1,
**dadurch gekennzeichnet, dass** der Zylinder (13,14) über seine gesamte Länge einen konstanten Querschnitt aufweist.

6. Volumenstromdosiereinrichtung nach Anspruch 1,
**dadurch gekennzeichnet, dass** die in den Zylinder (13,14) mündenden Leitungen (32,34,35) an unterschiedlichen Enden einmünden.

7. Volumenstromdosiereinrichtung nach Anspruch 1,
**dadurch gekennzeichnet, dass** die Kolben (15) der beiden Verdrängereinrichtungen (13,15;14,15) mechanisch miteinander gekuppelt sind.

8. Volumenstromdosiereinrichtung nach Anspruch 1,
**dadurch gekennzeichnet, dass** die Kolben (15) der beiden Verdrängereinrichtungen (13,15;14,15) miteinander einstückig sind.

9. Volumenstromdosiereinrichtung nach Anspruch 1,
**dadurch gekennzeichnet, dass** die Zylinder (13,14) der beiden Verdrängereinrichtungen (13,15;14,15) in einander übergehen und dass die Verdrängerkolben (15) ineinander übergehen.

10. Volumenstromdosiereinrichtung nach Anspruch 9,
**dadurch gekennzeichnet, dass** die freien Stirnenden (16,17) des für beiden Verdrängereirnichtungen (13,15;14,15) gemeinsamen Kolbens (15) mit je einer Stange (18,26) versehen sind, die abgedichtet durch das andere Stirnenden (7) der Zylinderkammer (13,14) hindurch führt.

11. Volumenstromdosiereinrichtung nach Anspruch 1,
**dadurch gekennzeichnet, dass** eine Wegmesseinrichtung vorgesehen ist, durch die der Hub und/oder die Geschwindigkeit der Verdrängerkolben (15) messbar ist.

12. Volumenstromdosiereinrichtung nach Anspruch 1,
**dadurch gekennzeichnet, dass** in der Verbindungsleitung (35) ein Absperrventil angeordnet ist.

## Claims

1. Volume flow metering device (1) for emitting a defined quantity flow of a fluid, in particular a compressible fluid, with a predefined pressure to a consumer (2),
with a supply line (32) for the fluid,
with a first displacement device (14, 15) which is connected to the supply line (32), with a second displacement device (13, 15) which is connected for flow purposes to the first displacement device (14, 15) via a connecting line (35),
with a feed line (34) which leads from the second displacement device (13, 15) to the consumer (2),
with a differential pressure measuring device (33, 35) or a flow measuring device (36) in the connecting line (35) for measuring a fluid exchange between the displacement devices (13, 14, 15), and
with a drive device (26, 31) which is coupled to the two displacement devices (13, 14, 15) such that the free volumes of the two displacement devices (13, 14, 15) are changed by the same amount in opposite directions,
wherein the first and second displacement devices (13, 14, 15) comprise a cylinder (13, 14) and wherein a displacement piston (15) leads in sealed fashion from an end face (8) of the cylinder (13, 14) into the cylinder (13, 14) such that the free volume of the cylinder (13, 14) is variable.

2. Volume flow metering device according to claim 1, **characterised in that** a pressure measuring device (33) is arranged in the supply line (32) or in the feed line (34) to the consumer (2).

3. Volume flow metering device according to claim 1, **characterised in that** the clear width of the cylinder (13, 14) is greater than the diameter of the displacement piston (15).

4. Volume flow metering device according to claim 1, **characterised in that** the displacement piston (15) has a constant cross-section over its entire active length.

5. Volume flow metering device according to claim 1, **characterised in that** the cylinder (13, 14) has a constant cross-section over its entire length.

6. Volume flow metering device according to claim 1, **characterised in that** the lines (32, 34, 35) emerging into the cylinder (13, 14) emerge at different ends.

7. Volume flow metering device according to claim 1, **characterised in that** the pistons (15) of the two displacement devices (13, 15; 14, 15) are mechanically coupled together.

8. Volume flow metering device according to claim 1, **characterised in that** the pistons (15) of the two displacement devices (13, 15; 14, 15) are formed integrally with each other.

9. Volume flow metering device according to claim 1, **characterised in that** the cylinders (13, 14) of the two displacement devices (13, 15; 14, 15) transform into each other and that the displacement pistons (15) transform into each other.

10. Volume flow metering device according to claim 9, **characterised in that** the free end faces (16, 17) of the piston (15) common to the two displacement devices (13, 15; 14, 15) are each provided with a rod (18, 26) which leads in sealed fashion through the other end face (7) of the cylinder chamber (13, 14).

11. Volume flow metering device according to claim 1, **characterised in that** a travel measuring device is provided which can measure the stroke and/or speed of the displacement pistons (15).

12. Volume flow metering device according to claim 1, **characterised in that** a shut-off valve is arranged in the connecting line (35).

## Revendications

1. Dispositif de dosage de débit volumétrique (1) destiné à distribuer un flux massique défini d'un fluide, en particulier d'un fluide compressible, avec une pression prédéterminée, à un récepteur (2),
comprenant une conduite d'amenée (32) pour le fluide,
comprenant un premier dispositif à déplacement positif (14, 15) qui est raccordé à la conduite d'amenée (32),
comprenant un deuxième dispositif à déplacement positif (13, 15) qui est relié sur le plan de l'écoulement au premier dispositif à déplacement positif (14, 15) par une conduite de liaison (35),
comprenant une conduite d'alimentation (34) qui mène du deuxième dispositif à déplacement positif (13, 15) au récepteur (2),
comprenant un dispositif de mesure de pression différentielle (33, 37) ou un dispositif de mesure de débit (36) dans la conduite de liaison (35), destiné à mesurer un échange de fluide entre les dispositifs à déplacement positif (13, 14, 15), et
comprenant un dispositif d'entraînement (26, 31) qui est accouplé aux deux dispositifs à déplacement positif (13, 14, 15), de manière à ce que les volumes libres des deux dispositifs à déplacement positif (13, 14, 15) soient modifiés de la même valeur, dans des sens opposés,
sachant que les premier et deuxième dispositifs à déplacement positif (13, 14, 15) présentent un cylindre (13, 14) et qu'un piston déplaceur (15) pénètre de façon étanche dans le cylindre (13, 14) depuis une face frontale (8) du cylindre (13, 14), de manière à ce que le volume libre du cylindre (13, 14) puisse être modifié.

2. Dispositif de dosage de débit volumétrique selon la revendication 1, **caractérisé en ce qu'**un dispositif de mesure de pression (33) est installé dans la conduite d'amenée (32) ou dans la conduite d'alimentation (34) menant au récepteur (2).

3. Dispositif de dosage de débit volumétrique selon la revendication 1, **caractérisé en ce que** la largeur intérieure du cylindre (13, 14) est plus grande que le diamètre du piston déplaceur (15).

4. Dispositif de dosage de débit volumétrique selon la revendication 1, **caractérisé en ce que** le piston déplaceur (15) présente une section transversale constante sur toute sa longueur active.

5. Dispositif de dosage de débit volumétrique selon la revendication 1, **caractérisé en ce que** le cylindre (13, 14) présente une section transversale constante sur toute sa longueur.

6. Dispositif de dosage de débit volumétrique selon la revendication 1, **caractérisé en ce que** les conduites (32, 34, 35) débouchant dans le cylindre (13, 14) débouchent à des extrémités différentes.

7. Dispositif de dosage de débit volumétrique selon la revendication 1, **caractérisé en ce que** les pistons (15) des deux dispositifs à déplacement positif (13, 15 ; 14, 15) sont couplés mécaniquement l'un à l'autre.

8. Dispositif de dosage de débit volumétrique selon la revendication 1, **caractérisé en ce que** les pistons (15) des deux dispositifs à déplacement positif (13, 15 ; 14, 15) sont réalisés d'une seule pièce l'un avec l'autre.

9. Dispositif de dosage de débit volumétrique selon la revendication 1, **caractérisé en ce que** les cylindres (13, 14) des deux dispositifs à déplacement positif (13, 15 ; 14, 15) sont en continuité l'un avec l'autre et **en ce que** les pistons déplaceurs (15) sont en continuité l'un avec l'autre.

10. Dispositif de dosage de débit volumétrique selon la revendication 9, **caractérisé en ce que** les extrémités frontales (16, 17) libres du piston (15) qui est commun aux deux dispositifs à déplacement positif (13, 14, 15) sont dotées respectivement d'une tige (18, 26) qui passe de manière étanche à travers l'autre extrémité frontale (7) de la chambre de cylindre (13, 14).

11. Dispositif de dosage de débit volumétrique selon la revendication 1, **caractérisé en ce qu'**il est prévu un dispositif de mesure de déplacement qui permet de mesurer la course et/ou la vitesse des pistons déplaceurs (15).

12. Dispositif de dosage de débit volumétrique selon la revendication 1, **caractérisé en ce qu'**une vanne d'isolement est disposée dans la conduite de liaison (35).
